# EUROPÄISCHE PATENTSCHRIFT

(11) **EP 1 507 312 B1**
(45) Veröffentlichungstag und Bekanntmachung des Hinweises auf die Patenterteilung: **02.11.2006**
(21) Anmeldenummer: 04103522.1
(22) Anmeldetag: 22.07.2004
(51) Int. Cl.: H01Q 3/26, H01Q 1/24, H04B 7/00, H01Q 21/08

(54) **Verfahren zum Betrieb einer Antenneneinheit einer beweglichen Station sowie entsprechende Antenneneinheit**
Method of operation of an antenna unit of a mobile station and corresponding antenna unit
Procédé d'exploitation d'une unité d'antenne de station mobile et unité d'antenne correspondante

(30) Priorität: 14.08.2003 DE 10337446
(43) Veröffentlichungstag der Anmeldung: 16.02.2005
(73) Patentinhaber: SIEMENS AKTIENGESELLSCHAFT, 80333 München (DE)
(72) Erfinder: Eichinger, Josef, 85464, Neufinsing (DE); Zirwas, Wolfgang, 82194, Gröbenzell (DE)

(56) Entgegenhaltungen:
- EP-A- 0 459 616
- EP-A- 1 045 472
- US-A1- 2003 053 523

## Beschreibung

Verfahren zum Betrieb einer Antenneneinheit einer beweglichen Station sowie entsprechende Antenneneinheit

Die Erfindung betrifft ein Verfahren zum Betrieb einer Antenneneinheit einer beweglichen Station und eine entsprechende Antenneneinheit.

In Funkkommunikationssystemen erfolgt die Übertragung von Daten mittels elektromagnetischer Wellen. Um empfangene Daten korrekt detektieren zu können ist eine Kenntnis des Übertragungskanals notwendig. Die Eigenschaften des Übertragungskanals können durch eine Kanalschätzung bestimmt werden. Bei sich schnell ändernden Kanälen muss die Kanalschätzung relativ häufig erneut durchgeführt werden. Zu Änderungen des Übertragungskanals kommt es insbesondere dann besonders häufig, wenn die sendende Station und/oder die empfangende Station sich während der Datenübertragung bewegen.

Aus der Europäischen Patentanmeldung EP 1045472 A2 ist eine Funktelefonanlage für Fahrzeuge mit einer Gruppenantennenanlage mit mehreren Antennenelementen bekannt. In der Gruppenantennenanlage sind steuerbare Phasen bzw. Amplitudenstellglieder vorhanden, welche derart eingestellt sind, dass ein gerichteter Empfang mit Hauptempfangsrichtung gegeben ist. Mit dem in dieser Europäischen Patentanmeldung beschriebenen Ansatz ist der Vorteil verbunden, dass die für den Empfangsfall ausfindig gemachte Hauptempfangsrichtung auch für den Sendefall als Hauptstrahlungsrichtung mit Hilfe der Phasen- bzw. Amplitudenstellglieder eingestellt werden kann. Dies trifft insbesondere auf Mobilfunksysteme mit Zeitduplexverfahren zu, welche in einander abwechselnden Sequenzen zwischen Senden und Empfangen umschalten und sich während der Sende- bzw. Empfangsperioden, die relative Position des Fahrzeugs zur Feststation nicht relevant ändert.

Der Erfindung liegt die Aufgabe zugrunde, ein Verfahren anzugeben, mit dem die Kanalschätzung in Falle einer an der Datenübertragung beteiligten beweglichen Station verbessert werden kann.

Diese Aufgabe wird mit einem Verfahren gemäß Anspruch 1 sowie der Antenneneinheit gemäß dem nebengeordneten Anspruch 7 gelöst. Vorteilhafte Aus- und Weiterbildungen der Erfindung sind Gegenstand abhängiger Ansprüche.

Das Verfahren zum Betrieb einer Antenneneinheit einer beweglichen ersten Station in einem Funkkommunikationssystem sieht vor, dass zum Übertragen von Daten zwischen der ersten Station und einer zweiten Station ein Übertragungskanal verwendet wird und dass während der Bewegung der ersten Station die Position der Charakteristik der Antenneneinheit relativ zur ersten Station in der Weise verändert wird, dass einer durch die Bewegung bedingten Änderung der Position der Charakteristik relativ zur zweiten Station entgegengewirkt wird.

Die erste Station kann eine sendende Station und die zweite Station eine empfangende Station sein. Dann handelt es sich bei der Charakteristik ("Directional Radio Pattern") der Antenneneinheit um eine Sendecharakteristik. Es kann jedoch auch der umgekehrte Fall vorliegen. Dann handelt es sich bei der Charakteristik der Antenneneinheit um eine Empfangscharakteristik. Während die beiden Stationen eine bidirektionale Verbindung unterhalten, sind sie jeweils sowohl sendende als auch empfangende Station und bei der Charakteristik handelt es sich wahlweise um die Sendecharakteristik oder die Empfangscharakteristik der Antenneneinheit, die unter Umständen übereinstimmen können.

Die Erfindung ist auf beliebige Funkkommunikationssysteme anwendbar, bei denen eine der beiden an der Datenübertragung beteiligten Stationen sich relativ zu der anderen beteiligten Station bewegt.

Durch das erfindungsgemäße Entgegenwirken einer Positionsänderung der Charakteristik relativ zur zweiten Station wird bewirkt, dass sich der Übertragungskanal zwischen den beiden Stationen weniger stark ändert, als es der Fall wäre, wenn das Entgegenwirken unterbleiben würde. Aus diesem Grund sind Ergebnisse einer Kanalschätzung des Übertragungskanals trotz der Bewegung der ersten Station auch ohne Durchführung einer erneuten Kanalschätzung während eines längeren Zeitraumes repräsentativ für den Übertragungskanal, als ohne das erfindungsgemäße Verfahren. Im optimalen Fall wird das Entgegenwirken so durchgeführt, dass sich die Charakteristik relativ zur zweiten Station überhaupt nicht ändert. Das bedeutet, dass sich auch der Übertragungskanal nicht ändert.

Nach der Erfindung wird vor oder zu Beginn der Veränderung der Position der Charakteristik der Antenneneinheit relativ zur ersten Station eine Schätzung des Übertragungskanals durchgeführt und es werden die Ergebnisse dieser Schätzung während der Veränderung der Position der Charakteristik zur Detektion von Daten verwendet. Dies ermöglicht den Verzicht auf die Durchführung einer erneuten Kanalschätzung während eines begrenzten Zeitraumes, obwohl sich die erste Station bewegt.

Nach der Erfindung weist die Antenneneinheit mehrere Antennenelemente auf, die vorzugsweise entlang wenigstens einer Achse angeordnet sind.

Gemäß einer Weiterbildung erfolgt die Veränderung der Position der Charakteristik dabei in einer Weise, dass sie in einer Richtung entlang der Achse von einer ersten bis zu einer zweiten Position verschoben wird. Durch das Verschieben der Charakteristik in entgegengesetzter Richtung zur Bewegungsrichtung der ersten Station kann der Einfluss dieser Bewegung auf die Position der Charakteristik relativ zur zweiten Station vorteilhaft entgegengewirkt werden.

Nach der Erfindung wird während des Verschiebens der Charakteristik von der ersten zur zweiten Position eine zweite Kanalschätzung durchgeführt, wobei zwischenzeitlich nicht für die Erzeugung der Charakteristik genutzte Antennenelemente verwendet werden. Hierbei kann berücksichtigt werden, dass die Charakteristik relativ zur zweiten Station neu ausgerichtet werden muss, nachdem die Charakteristik die zweite Position erreicht hat. Die Ausrichtung dieser Charakteristik und der damit verbundene Übertragungskanal kann daher bereits während des Verschiebens der Charakteristik von der ersten zur zweiten Position abgeschätzt werden und die entsprechende zweite Kanalschätzung durchgeführt werden. Dies gestattet es, dass beim anschließenden Verändern der Charakteristik relativ zur zweiten Station die Ergebnisse der zweiten Kanalschätzung (wenigstens teilweise) bereits vorliegen, so dass umgehend mit der Detektion weiterer übertragener Daten fortgefahren werden kann.

Wenn die Antenneneinheit mehrere Antennenelemente aufweist, ist es nach einer Ausführungsform der Erfindung möglich, die Veränderung der Position der Charakteristik relativ zur ersten Station wenigstens teilweise durch eine Änderung von Gewichtungsfaktoren für wenigstens einen Teil der Antennenelemente vorzunehmen. Bei den Gewichtungsfaktoren handelt es sich um komplexe Gewichtungsfaktoren, die den Beitrag des jeweiligen Antennenelementes nach Phase und Amplitude gewichten.

Zusätzlich oder alternativ hierzu kann bei einer anderen Ausführungsform der Erfindung die Veränderung der Position der Charakteristik relativ zur ersten Station wenigstens teilweise durch Verwendung jeweils unterschiedlicher Antennenelemente erfolgen. Dabei ist es vorteilhaft, wenn die Antennenelemente in wenigstens einer Richtung in einem Abstand angeordnet sind, der kleiner ist als die Hälfte der Wellenlänge von durch die Antenneneinheit zu sendenden und/oder zu empfangenden Funkwellen. Je kleiner der Abstand zwischen den Antennenelementen ist, in umso kleineren Schritten kann die Positionsverschiebung der Charakteristik durchgeführt werden.

Es ist vorteilhaft, wenn die Summe der Leistungen von über die Antennenelemente abgestrahlten Funkwellen beim Verändern der Charakteristik im Wesentlichen konstant gehalten wird. Dies ermöglicht eine gleichbleibende Leistungsaufnahme durch die Antenneneinheit.

Die Erfindung eignet sich zur Anwendung für beliebige Antennencharakteristiken. Insbesondere eignet sie sich zur Anwendung für das räumliche Multiplexen mittels MIMO-Antennen (Multiple Input Multiple Output). Nach einer vorteilhaften Weiterbildung wird die Erfindung mit kooperativen Antennen durchgeführt. Bei diesen sind die einzelnen Antennenelemente einer Antenneneinheit durch einzelne, in der Regel mobile Teilnehmerstationen gebildet, die durch eine aufeinander abgestimmte Ansteuerung die Charakteristik der gemeinsamen Antenneneinheit bestimmen. Zu diesem Zwecke müssen die Aussendungen der einzelnen Teilnehmerstationen aufeinander synchronisiert werden, um zu erreichen, dass der durch die Bewegung der ersten Station bedingten Änderung der Position der Charakteristik relativ zur zweiten Station entgegengewirkt werden kann.

Die erfindungsgemäße Antenneneinheit weist entsprechende Mittel bzw. Komponenten auf, die zur Durchführung des erfindungsgemäßen Verfahrens sowie seiner Weiterbildungen notwendig sind.

Im Folgenden wird die Erfindung anhand von in den Figuren dargestellten Ausführungsbeispielen näher erläutert. Es zeigen:
- Figur 1: ein erstes Ausführungsbeispiel der Erfindung,
- Figur 2: weitere Darstellungen zum ersten Ausführungsbeispiel und
- Figuren 3A und 3B: ein zweites Ausführungsbeispiel der Erfindung.

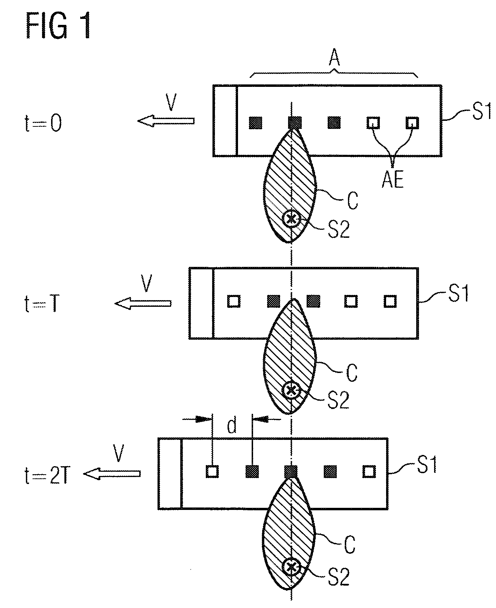

Figur 1 zeigt eine nichtmaßstäbliche Darstellung eines ersten Ausführungsbeispieles der Erfindung in einer Draufsicht. Dargestellt ist eine bewegliche erste Station S1, beispielsweise ein Auto. Auf dem Dach der ersten Station S1 befindet sich eine Antenneneinheit A, die entlang einer Achse angeordnet eine Mehrzahl von Antennenelemente AE aufweist. In der Figur 1 wurden lediglich fünf Antennenelemente AE dargestellt, obwohl in der Praxis häufig eine größere Anzahl von Antennenelementen AE sinnvoll sein könnten. Figur 1 zeigt von oben nach unten in drei Darstellungen übereinander die Position der ersten Station S1, die sich mit einer Geschwindigkeit v von rechts nach links bewegt, zu einem ersten Zeitpunkt t=0, einem zweiten Zeitpunkt t=T und einem dritten Zeitpunkt t=2T.

In Figur 1 sind Antennenelemente AE, die momentan zum Senden und Empfangen von Daten verwendet werden, schwarz dargestellt, während Antennenelemente AE, die derzeit nicht zum Senden und Empfangen von Daten verwendet werden, weiß dargestellt sind.

Die erste Station S1 kommuniziert mittels ihrer Antenneneinheit A über eine bidirektionale Verbindung mit einer zweiten Station S2. Zum Senden der eigenen Daten und zum Empfangen der Daten der zweiten Station S2 wird die Antenneneinheit A so gesteuert, dass sie eine entsprechende Sende- und Empfangscharakteristik C aufweist, die im folgenden Fall eine Keulenform aufweist. Die zweite Station S2 und die Charakteristik C sowie der Abstand zwischen den beiden Stationen S1, S2 wurde aus darstellerischen Gründen nicht maßstäblich ausgeführt.

Die zweite Station S2 ist beim hier betrachteten Ausführungsbeispiel eine nichtbewegliche Station. Bei herkömmlichen Systemen würde die Charakteristik C der Antenneneinheit A während der Bewegung der ersten Station S1 relativ zur zweiten Station S2 so verändert, dass ihre Position sowohl relativ zur ersten Station S1 als auch relativ zur zweiten Station S2 verändert wurde, zum Beispiel durch entsprechendes Schwenken der Charakteristik C. Hierdurch käme es zu Änderungen des Übertragungskanals zwischen den beiden Stationen. Gemäß der Erfindung wird nun während eines begrenzten Zeitraumes während der Bewegung der ersten Station S1 die Charakteristik C in der Weise erzeugt, dass sich ihre Position zwar relativ zur ersten Station S1, nicht jedoch bezüglich der zweiten Station S2 ändert. Dies wird bei diesem Ausführungsbeispiel dadurch erreicht, dass zu unterschiedlichen Zeitpunkten während der Bewegung der ersten Station S1 unterschiedliche Antennenelemente AE der Antenneneinheit A zur Erzeugung der Charakteristik C verwendet werden. Zum ersten Zeitpunkt t=0 werden beispielsweise die ersten drei Antennenelemente AE auf dem Dach der ersten Station S1 zur Erzeugung der Charakteristik C verwendet. Die beiden übrigen Antennenelemente (in der Figur 1 weiß dargestellt) werden nicht zur Erzeugung der Charakteristik C verwendet, dass heißt über sie werden keine Daten ausgesendet bzw. empfangen.

Zum zweiten Zeitpunkt t=T wird die Charakteristik C der Antenneneinheit A mittels des zweiten und dritten Antennenelementes AE, betrachtet in Fahrtrichtung der ersten Station S1, erzeugt. Durch entsprechende Ansteuerung kann erreicht werden, dass sich die Lage der Charakteristik C bezüglich der zweiten Station S2 gegenüber dem ersten Zeitpunkt t=0 nicht verändert. Relativ zur ersten Station S1 hat jedoch eine Verschiebung der Charakteristik C in der Fahrtrichtung der ersten Station S1 entgegengesetzter Richtung stattgefunden.

Zum dritten Zeitpunkt t=2T erfolgt eine weitere Verschiebung der Position der Charakteristik C relativ zur ersten Station S1 nach rechts, wobei sich die Position relativ zur zweiten Station S2 wieder nicht ändert. Zum dritten Zeitpunkt erfolgt die Erzeugung der Charakteristik C mit den mittleren drei Antennenelementen AE.

Zu allen drei in Figur 1 dargestellten Zeitpunkten erfolgt die sendemäßige Ansteuerung der schwarz dargestellten Antennenelemente AE, die zur Erzeugung der Charakteristik C dienen, in der Weise, dass die Summe der Sendeleistungen konstant gehalten wird. Die Antennenelemente AE sind in einem Abstand d zueinander angeordnet, der kleiner als die halbe Wellenlänge der Funkwellen ist, über die die Daten zwischen den beiden Stationen S1, S2 ausgetauscht werden. Beispielsweise kann der Abstand d zwischen den Antennenelementen AE ein Viertel des jeweils kleineren Wertes der Wellenlängen der Funkwellen der beiden Übertragungsrichtungen betragen.

Die Figur 1 zeigt nur drei Zwischenzustände der Verschiebung der Position der Charakteristik C relativ zur ersten Station S1. Vorteilhafterweise wird das Verschieben der Position der Charakteristik C jedoch so durchgeführt, dass sie an der Position des in Fahrtrichtung der ersten Station S1 vordersten Antennenelement AE beginnt und beim letzten Antennenelement (also ganz rechts in Figur 1) endet. Dies ermöglicht ein (zumindest annäherndes) Konstanthalten des Übertragungskanals zwischen den beiden Stationen S1, S2 während des Verschiebens. Da die Charakteristik C sich relativ zur zweiten Station S2, und damit auch der Übertragungskanal zwischen den beiden Stationen S1, S2, während des Verschiebens der Charakteristik C nicht oder nur kaum verändert, ist es ausreichend, zu Beginn des Verschiebens eine Schätzung des Übertragungskanals durchzuführen, deren Ergebnisse zur Detektion von Daten während des Verschiebevorgangs verwendet werden können. Dies gilt sowohl für die Kanalschätzung in der einen wie auch in der anderen Übertragungsrichtung. Die Kanalschätzung kann auf übliche, dem Fachmann bekannte Weise durchgeführt werden. Insbesondere kann sie anhand von über den Übertragungskanal übertragenen Pilotsymbolen durchgeführt werden.

Um die Position der Charakteristik C relativ zur zweiten Station S2 konstant zu halten, ist es notwendig, dass ihr Verschieben in entgegengesetzter Richtung zur Fahrtrichtung der ersten Station S1 relativ zu dieser ebenfalls mit der Geschwindigkeit v der ersten Station S1 erfolgt.

Die Geschwindigkeit v der ersten Station S1 kann über einen Tachometer der ersten Station S1 oder durch den Empfang von GPS-Signalen ermittelt werden. Alternativ kann die Geschwindigkeit v auch aus der zeitlichen Änderung der Kanalimpulsantwort geschätzt werden. Da sich die Fahrzeuggeschwindigkeit in der Regel nicht sehr schnell ändert, sollte eine relativ genaue Schätzung möglich sein, bei der die zeitliche Änderung der resultierenden Kanalimpulsantwort minimiert wird.

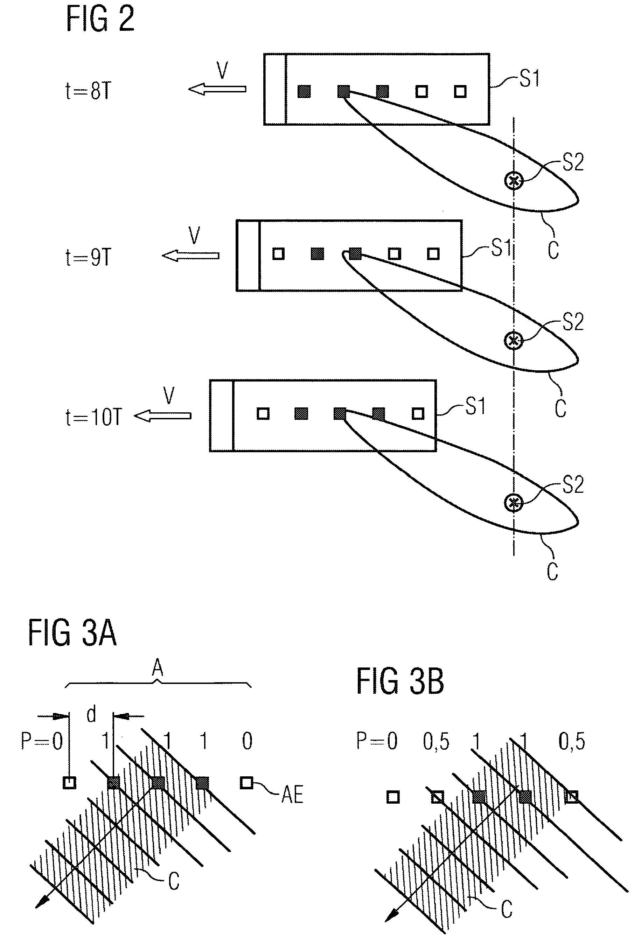

Figur 2 zeigt die beiden Stationen S1, S2 des Ausführungsbeispiels aus Figur 1 zu späteren Zeitpunkten, nämlich einem vierten Zeitpunkt t=8T, einem fünften Zeitpunkt t=9T und einem sechsten Zeitpunkt t=10T. Dabei wurde angenommen, dass vor dem Erreichen des obersten in Figur 2 dargestellten Zustandes gemäß Figur 1 die dort von oben nach unten weisende keulenförmige Charakteristik C relativ zur ersten Station S1 bis ganz nach rechts verschoben wurde. Da dabei das letzte (rechteste) Antennenelement AE der Antenneneinheit A erreicht wurde, war aufgrund der Beibehaltung der Bewegung der ersten Station S1 mit der Geschwindigkeit v ein weiteres Konstanthalten der Position der Charakteristik C relativ zur zweiten Station S2 nicht mehr möglich. Aus diesem Grunde erfolgte eine Neuausrichtung der Charakteristik C nun auch relativ zur zweiten Station S2, wobei sich die in Figur 2 dargestellte schräge Ausrichtung der keulenförmigen Charakteristik C ergab.

Figur 2 zeigt zu den drei Zeitpunkten t=8T, 9T, 10T wiederum drei Zwischenzustände während des Verschiebens der nun neu ausgerichteten Charakteristik C vom linkesten Antennenelement AE zum rechtesten Antennenelement. Dargestellt sind wiederum Zwischenzustände, bei denen zum vierten Zeitpunkt t=8T die ersten drei Antennenelemente AE, zum fünften Zeitpunkt t=9T das zweite und dritte Antennenelement AE und zum sechsten Zeitpunkt t=10T die mittleren drei Antennenelemente AE zur Erzeugung der Charakteristik C verwendet werden.

Obwohl in den Figuren 1 und 2 eine Antenneneinheit A dargestellt wurde, bei der alle Antennenelemente AE nur entlang einer Achse angeordnet sind, kann es vorteilhaft und unter Umständen auch notwendig sein, Antenneneinheiten vorzusehen, deren Antennenelemente zweidimensional angeordnet sind, so dass die Form und Richtung der Charakteristik C in möglichst großen Freiheitsgraden wählbar ist.

Da sich der Übertragungskanal zwischen den beiden Stationen S1, S2 aufgrund der Neuausrichtung der Charakteristik C relativ zur zweiten Station S2 beim Übergang von der Figur 1 zur Figur 2 geändert hat, ist für die Detektion der zu übertragenden Daten die Durchführung einer neuen Kanalschätzung notwendig. Diese kann günstigerweise zumindest teilweise bereits durchgeführt werden, während die Datendetektion noch mit den Ergebnissen der ersten Kanalschätzung durchgeführt wird, nämlich während des Verschiebens der Charakteristik C gemäß Figur 1. Die zur Erzeugung der Charakteristik C zu den unterschiedlichen Zeitpunkten t=0, t=T und t=2T nicht verwendeten Antennenelemente AE können nämlich vorteilhaft dazu verwendet werden, eine Schätzung des sich nach dem Neuausrichten der Charakteristik C gemäß Figur 2 ergebenden Übertragungskanals durchzuführen.

Die Figuren 3A und 3B zeigen für ein anderes Ausführungsbeispiel der Erfindung, dass das Verschieben der Charakteristik C, die in diesen Figuren vereinfachend rechteckig dargestellt wurde, von links nach rechts nicht nur dadurch erfolgen kann, dass einzelne Antennenelemente AE keinen Beitrag zu deren Erzeugung leisten, während andere Antennenelemente AE zum Senden und Empfangen der Daten dienen. Beim Ausführungsbeispiel gemäß Figuren 3A und 3B wird jedes Antennenelement AE mit einem Gewichtungsfaktor P versehen, dessen Wert im oberen Teil der Figuren dargestellt wurde. Dieser kann beim gezeigten Ausführungsbeispiel auch Werte annehmen, die zwischen 0 und 1 liegen. Dabei bedeutet ein Gewichtungsfaktor von 0, dass das betreffende Antennenelement AE nicht zur Erzeugung der Antennencharakteristik C beiträgt. Ein Gewichtungsfaktor P=1 bedeutet, dass das entsprechende Antennenelement AE maximal zur Ausführung der Charakteristik C beiträgt.

Der Figur 3B ist entnehmbar, dass das zweite und fünfte Antennenelement AE mit einem Gewichtungsfaktor P=0,5 versehen wurde. In Figur 3B ist die Charakteristik C im Vergleich zur Figur 3A nach rechts parallel verschoben worden. Durch die Wahl von Gewichtungsfaktoren P, deren Wert zwischen 0 und 1 liegt, ist es möglich, die Verschiebung von links nach rechts in kleineren Schritten vorzunehmen, als wenn als Gewichtungsfaktor P nur die Werte 0 und 1 zulässig wären.

Ein veränderter Wert für den Gewichtungsfaktor P bedeutet für das Aussenden von Daten durch die erste Station S1, dass für die Antennenelemente AE entsprechend diesen Gewichtungsfaktoren P unterschiedliche Leistungswerte für die Sendeleistung verwendet werden. Von Figur 3A zu 3B ändert sich die Position der Charakteristik C um einen Wert von λ/4.

Die parallelen Linien in den Figuren 3A und 3B zeigen den Verlauf der Wellenfronten der übertragenden Signale. Dieser parallele Verlauf ist in Wirklichkeit nur zutreffend für große Abstände von den jeweils sendenden Antennenelementen.

Bei den in den Ausführungsbeispielen gemäß Figur 1 bis Figur 3B verwendeten Antenneneinheiten A der ersten Station S1 handelt es sich um sogenannte MIMO-(Multiple Input Multiple Output) Antennen. In der Regel weist bei Verwendung derartiger Antennen auch die zweite Station S2 eine entsprechende Antenne auf. Die Richtung der Antennencharakteristik C kann dabei durch Steuerung der Phase des entsprechenden Antennenelements beeinflusst werden.

Durch die Anordnung der Antennenelemente AE auf dem Dach der ersten Station S1 (es sind natürlich auch andere Anordnungen möglich) wird erreicht, dass die Ausbreitung der Funkwellen durch die erste Station S1 nur unwesentlich beeinflusst wird.

Das Verschieben der Charakteristik C in der Weise, dass ihre Position relativ zur zweiten Station S2 nahezu unverändert bleibt, kann beispielsweise während eines Zeitraumes von 10ms erfolgen. Ordnet man die Antennenelemente AE in einem Abstand d=λ/2 an und ist die Geschwindigkeit der ersten Station S1 v=100km/h bei einer Trägerfrequenz der Funkwellen von 2GHz, bleibt der zuvor geschätzte Übertragungskanal für eine maximale Zeit von 2,6ms nahezu konstant. Mit nur vier Antennenelementen AE mit gegenseitigem Abstand d=λ/2 ist es dann möglich, den Übertragungskanal für viermal 2,6ms, also mehr als 10ms, zu stabilisieren, was in der Größenordnung einer typischen Rahmenlänge von zukünftigen Funkkommunikationssystemen liegt. Während dieser Zeitdauer ist der Übertragungskanal relativ stabil, so dass die Ergebnisse einer zuvor durchgeführten Kanalschätzung während dieses Zeitraumes verwendet werden können. Die maximal zulässige Geschwindigkeit für die erste Station S1 sowie die Zeitdauer eines Funkübertragungsrahmens, während dessen der Übertragungskanal gemäß der Erfindung konstant gehalten werden soll, bestimmen, wie viele Antennenelemente AE für die Durchführung der beschriebenen Positionsverschiebung der Charakteristik C notwendig sind.

Bislang werden MIMO-Antennensysteme zum Erzielen von Diversitätsgewinnen und/oder räumlichen Multiplexen verwendet, um die Kapazität von Funkverbindungen zu erhöhen. Aufgrund der Erfindung kann bei Verwendung von MIMO-Antennen als Antenneneinheit A dieses System auch dafür eingesetzt werden, um Übertragungskanäle im Fall von bewegten Stationen zu stabilisieren.

Die aktiven Antennenelemente AE in den Figuren 1 bis 3B senden alle dasselbe Sendesignal aus. Die Ausrichtung der Charakteristik C wird dadurch bestimmt, dass die Aussendung der Antennenelemente AE mit zueinander konstanten Phasendifferenzen erfolgt. Bei Ausführungsbeispielen, bei denen der Abstand zwischen den Antennenelementen AE variiert, ist die Phasendifferenz ebenfalls variabel.

Besonders vorteilhaft kann es sein, statt einer planaren Anordnung der Antennenelemente AE eine dreidimensionale Struktur zu verwenden. Auf diese Weise ist eine dreidimensionale Kompensation der Änderungen des Übertragungskanals möglich.

## Patentansprüche

1. Verfahren zum Betrieb einer Antenneneinheit (A) einer beweglichen ersten Station (S1) in einem Funkkommunikationssystem, bei dem
- zum Übertragen von Daten zwischen der ersten Station (S1) und einer zweiten Station (S2) ein Übertragungskanal verwendet wird
- und während der Bewegung der ersten Station (S1) die Position der Charakteristik (C) der Antenneneinheit (A) relativ zur ersten Station (S1) in der Weise verändert wird, dass einer durch die Bewegung bedingten Änderung der Position der Charakteristik (C) relativ zur zweiten Station (S2) entgegengewirkt wird, sowie
- die Antenneneinheit (A) mehrere Antennenelemente (AE) aufweist, wobei
- vor der Veränderung der Position der Charakteristik (C) der Antenneneinheit (A) relativ zur ersten Station (S1) eine Schätzung des Übertragungskanals durchgeführt wird und Ergebnisse dieser Kanalschätzung während der Veränderung der Position der Charakteristik (C) zur Detektion von Daten verwendet werden,
**dadurch gekennzeichnet, dass**
eine zweite Kanalschätzung während des Verschiebens der Charakteristik (C) von der ersten zur zweiten Position mit zwischenzeitlich nicht für die Erzeugung der Charakteristik (C) genutzten Antennenelementen (AE) durchgeführt wird.

2. Verfahren nach Anspruch 1, bei dem die Antennenelemente (AE) entlang wenigstens einer Achse angeordnet sind und die Veränderung der Position der Charakteristik (C) so erfolgt, dass sie in einer Richtung entlang der Achse von einer ersten bis zu einer zweiten Position verschoben wird.

3. Verfahren nach einem der vorstehenden Ansprüche, bei dem die Antenneneinheit (A) mehrere Antennenelemente (AE) aufweist und die Veränderung der Position der Charakteristik (C) relativ zur ersten Station (S1) wenigstens teilweise durch eine Änderung von Gewichtungsfaktoren (P) für wenigstens einen Teil der Antennenelemente (AE) erfolgt.

4. Verfahren nach einem der vorstehenden Ansprüche, bei dem
die Antenneneinheit (A) mehrere Antennenelemente (AE) aufweist und die Veränderung der Position der Charakteristik (C) relativ zur ersten Station (S1) wenigstens teilweise durch Verwendung jeweils unterschiedlicher Antennenelemente (AE) erfolgt.

5. Verfahren nach Anspruch 3 oder 4, bei dem
die Antennenelemente (AE) in wenigstens einer Richtung in einem Abstand (d) angeordnet sind, der kleiner ist als die Hälfte der Wellenlänge von durch die Antenneneinheit (A) zu sendenden und/oder zu empfangenden Funkwellen.

6. Verfahren nach einem der Ansprüche 3 bis 5, bei dem
die Summe der Leistungen von über die Antennenelemente (AE) abgestrahlten Funkwellen beim Verändern der Charakteristik (C) im Wesentlichen konstant gehalten wird.

7. Antenneneinheit (A) für eine bewegliche erste Station (S1) eines Funkkommunikationssystems zum Übertragen von Daten zwischen der ersten Station (S1) und einer zweiten Station (S2) über einen Übertragungskanal,
- mit Mitteln zum Verändern der Position der Charakteristik (C) der Antenneneinheit (A) relativ zur ersten Station (S1) während der Bewegung der ersten Station in der Weise, dass einer durch die Bewegung bedingten Änderung der Position der Charakteristik (C) relativ zur zweiten Station (S2) entgegengewirkt wird, bei dem
- die Antenneneinheit (A) mehrere Antennenelemente (AE) aufweist,
- sowie umfassend Mittel zur Durchführung einer Schätzung des Übertragungskanals vor der Veränderung der Position der Charakteristik (C) der Antenneneinheit (A) relativ zur ersten Station (S1) und Ergebnisse dieser Kanalschätzung während der Veränderung der Position der Charakteristik (C) zur Detektion von Daten verwendet werden können,
**gekennzeichnet durch**
Mittel zu einer zweiten Kanalschätzung während des Verschiebens der Charakteristik (C) von der ersten zur zweiten Position mit zwischenzeitlich nicht für die Erzeugung der Charakteristik (C) genutzten Antennenelementen (AE).

8. Antenneneinheit nach Anspruch 7, die eine Sendeantenneneinheit und/oder eine Empfangsantenneneinheit ist.

## Claims

1. Method for operating an antenna unit (A) of a mobile first station (S1) in a radio communication system, wherein
- a transmission channel is used to transmit data between the first station (S1) and a second station (S2)
- and during movement of the first station (S1), the position of the characteristic (C) of the antenna unit (A) in relation to the first station (S1) is changed such that a change, caused by the movement, in the position of the characteristic in relation to the second station (S2) is counteracted, and
- the antenna unit (A) has a number of antenna elements (AE), with
- the transmission channel being estimated before the change in the position of the characteristic (C) of the antenna unit (A) in relation to the first station (S1) and results of this channel estimation are used during the change in the position of the characteristic (C) to detect data,
**characterised in that**
a second channel estimation is carried out during displacement of the characteristic (C) from the first to the second position with antenna elements (AE) that are not used in the interim to generate the characteristic (C).

2. Method according to claim 1, wherein the antenna elements (AE) are disposed along at least one axis and the change in the position of the characteristic (C) is effected such that it is displaced in a direction along the axis from a first to a second position.

3. Method according to one of the preceding claims, wherein the antenna unit (A) has a number of antenna elements (AE) and the change in the position of the characteristic (C) in relation to the first station (S1) is effected at least partially by a change to weighting factors (P) for at least some of the antenna elements (AE).

4. Method according to one of the preceding claims, wherein the antenna unit (A) has a number of antenna elements (AE) and the change in the position of the characteristic (C) in relation to the first station (S1) is effected at least partially by the use of different antenna elements (AE) in each instance.

5. Method according to claim 3 or 4, wherein the antenna elements (AE) are disposed in at least one direction at a distance (d), which is smaller than half the wavelength of radio waves to be transmitted and/or received by the antenna unit (A).

6. Method according to one of claims 3 to 5, wherein the sum of the power of radio waves emitted via the antenna elements (AE) is kept essentially constant as the characteristic (C) is changed.

7. Antenna unit (A) for a mobile first station (S1) of a radio communication system for transmitting data between the first station (S1) and a second station (S2) via a transmission channel,
- with means for changing the position of the characteristic (C) of the antenna unit (A) in relation to the first station (S1) during movement of the first station, such that a change, caused by the movement, in the position of the characteristic (C) in relation to the second station (S2) is counteracted, wherein
- the antenna unit (A) has a number of antenna elements (AE),
- and comprising means for carrying out an estimation of the transmission channel before the change in the position of the characteristic (C) of the antenna unit (A) in relation to the first station (S1) and results of this channel estimation can be used during the change in the position of the characteristic (C) to detect data,
**characterised by**
means for a second channel estimation during displacement of the characteristic (C) from the first to the second position with antenna elements (AE) that are not used in the interim to generate the characteristic (C).

8. Antenna unit according to claim 7, which is a transmitting antenna unit and/or a receiving antenna unit.

## Revendications

1. Procédé pour l'exploitation d'une unité d'antenne (A) d'une première station (S1) mobile dans un système de radiocommunication, dans lequel
- un canal de transmission est utilisé pour la transmission de données entre la première station (S1) et une seconde station (S2)
- et pendant le déplacement de la première station (S1), la position de la caractéristique (C) de l'unité d'antenne (A) par rapport à la première station (S1) est modifiée en ce sens qu'on s'oppose à une modification, due au déplacement, de la position de la caractéristique (C) par rapport à la seconde station (S2), et
- l'unité d'antenne (A) présente plusieurs éléments d'antenne (AE),
- une évaluation du canal de transmission étant effectuée avant la modification de la position de la caractéristique (C) de l'unité d'antenne (A) par rapport à la première station (S1) et les résultats de cette évaluation de canal étant utilisés pendant la modification de la position de la caractéristique (C) pour la détection de données,
**caractérisé en ce que**
une seconde évaluation du canal est effectuée pendant le déplacement de la caractéristique (C) de la première à la seconde position avec des éléments d'antenne (AE) non utilisés entre-temps pour la génération de la caractéristique (C).

2. Procédé selon la revendication 1, dans lequel les éléments d'antenne (AE) sont disposés le long d'au moins un axe et la modification de la position de la caractéristique (C) s'effectue de telle sorte qu'elle est décalée dans une direction le long de l'axe d'une première à une seconde position.

3. Procédé selon l'une quelconque des revendications précédentes, dans lequel l'unité d'antenne (A) présente plusieurs éléments d'antenne (AE) et la modification de la position de la caractéristique (C) par rapport à la première position (S1) s'effectue au moins partiellement par une modification de facteurs de pondération (P) pour au moins une partie des éléments d'antenne (AE).

4. Procédé selon l'une quelconque des revendications précédentes, dans lequel l'unité d'antenne (A) présente plusieurs éléments d'antenne (AE) et la modification de la position de la caractéristique (C) par rapport à la première station (S1) s'effectue au moins partiellement par l'utilisation d'éléments d'antenne (AE) respectivement différents.

5. Procédé selon la revendication 3 ou 4, dans lequel les éléments d'antenne (AE) sont disposés au moins dans une direction à une distance (d) qui est inférieure à la moitié de la longueur d'onde des ondes radio à émettre et/ou à recevoir par l'unité d'antenne (A).

6. Procédé selon l'une quelconque des revendications 3 à 5, dans lequel la somme des puissances d'ondes radio émises par les éléments d'antenne (AE) est maintenue sensiblement constante lors de la variation de la caractéristique (C).

7. Unité d'antenne (A) pour une première station (S1) mobile d'un système de radiocommunication pour transmettre des données entre la première station (S1) et une seconde station (S2) au moyen d'un canal de transmission,
- avec des moyens pour la modification de la position de la caractéristique (C) de l'unité d'antenne (A) par rapport à la première station (S1) pendant le déplacement de la première station en ce sens qu'on s'oppose à une modification, due au déplacement, de la position de la caractéristique (C) par rapport à la seconde station (S2), sur laquelle
- l'unité d'antenne présente plusieurs éléments d'antenne (AE),
- et comprenant des moyens pour la réalisation d'une évaluation du canal de transmission avant la modification de la position de la caractéristique (C) de l'unité d'antenne (A) par rapport à la première station (S1) et les résultats de cette évaluation de canal pouvant être utilisés pendant la modification de la position de la caractéristique (C) pour la détection de données
**caractérisée par**
des moyens pour une seconde évaluation de canal pendant le déplacement de la caractéristique (C) de la première à la seconde position avec des éléments d'antenne (AE) non utilisés entre-temps pour la génération de la caractéristique (C).

8. Unité d'antenne selon la revendication 7, qui est une unité d'antenne d'émission et/ou une unité d'antenne de réception.
